# EUROPÄISCHE PATENTSCHRIFT

(11) **EP 2 239 482 B1**
(45) Veröffentlichungstag und Bekanntmachung des Hinweises auf die Patenterteilung: **26.09.2012**
(21) Anmeldenummer: 10003815.7
(22) Anmeldetag: 09.04.2010
(51) Int. Cl.: F16F 15/36

(54) **Baueinheit mit Auswuchtvorrichtung sowie Verfahren zur Fertigung der Baueinheit**
Construction unit with balancing device and method for producing the construction unit
Unité de montage dotée d'un dispositif d'équilibrage et procédé de fabrication de l'unité de montage

(30) Priorität: 11.04.2009 DE 102009017271
(43) Veröffentlichungstag der Anmeldung: 13.10.2010
(73) Patentinhaber: Schaeffler Technologies AG & Co. KG, 91074 Herzogenaurach (DE)
(72) Erfinder: Hehn, Werner, 91056 Erlangen (DE); Bauer, Jörg, 91056 Erlangen (DE); Nuißl, Christian, 90763 Fürth (DE)

(56) Entgegenhaltungen:
- EP-A2- 1 174 537
- WO-A1-97/07347
- DE-A1- 19 703 937
- DE-A1-102006 030 163

## Beschreibung

### Gebiet der Erfindung

Die Erfindung betrifft eine Baueinheit mit einer Welle, wobei die Welle zur Rotation um eine Drehachse ausgebildet ist, und mit einer Auswuchtvorrichtung, die mit der Welle drehfest verbunden ist, wobei die Auswuchtvorrichtung einen zu der Drehachse der Welle koaxial und/oder konzentrisch ausgebildeten Ringkanal sowie mindestens einen Auswuchtkörper aufweist, der in dem Ringkanal beweglich und/oder verschiebbar angeordnet ist. Die Erfindung betrifft auch ein Verfahren zur Fertigung der Baueinheit.

Unwuchten bei Maschinenteilen, insbesondere bei angetriebenen Wellen, führen im Betrieb zu Vibrationen, die zum einen in unangenehmer Weise wahrgenommen werden und zum anderen zur Beschädigung einer des Maschinenteil tragenden Vorrichtung führen können. Derartige Vibrationen bei von in der Hand aufzunehmenden Maschinen, beispielsweise Handschleifmaschinen oder Winkelschleifern, können im Extremfall sogar zu körperlichen Schäden des Benutzers führen.

Während es bei statischen Unwuchten möglich ist, diese durch statische Gegengewichte auszugleichen, können mit der Zeit entstehende Unwuchten, wie zum Beispiel begründet durch den Verschleiß eines mit dem Maschinenteil angetriebenen Werkzeugs, durch statische Maßnahmen nicht kompensiert werden.

Derartige z.B. verschleißbedingte Unwuchten können jedoch durch den Einsatz eines Unwuchtausgleichselements aufgefangen werden, welcher üblicherweise bei Bedarf auf das rotierende Maschinenteil bzw. auf die rotierende Welle aufgesteckt wird. In dem Autobalancer bewegen sich Auswuchtmassen frei auf einer Kreisbahn, wobei sich die Unwuchtmassen bei einer auftretenden Unwucht automatisch an Positionen bewegen, die sich gegenüber der Unwucht befinden. Durch die Verlagerung der Auswuchtmassen bildet sich ein Gegengewicht, durch das die Unwucht ausgeglichen oder minimiert wird.

Derartige Autobalancer sind beispielsweise aus der Druckschrift DE 10 2006 030 163 A1 der Anmelderin bekannt, die wohl den nächst kommenden Stand der Technik bildet. In dieser Druckschrift wird eine Einrichtung zum selbsttätigen Auswuchten eines sich drehenden Maschinenteils offenbart, wobei innerhalb einer die Rotationsachse des Maschinenteils umgebenden Unwuchtausgleichsscheibe in einem ringförmigen Hohlraum frei bewegliche Auswuchtmassen angeordnet sind, die die vorhandene Unwucht durch Einnahme einer Gegenlage ausgleichen. Die Unwuchtausgleichsscheibe ist aus zwei Halbscheiben aufgebaut, welche mindestens eine in axialer Richtung verlaufende Trennebene aufweisen. Eine ähnliche Einrichtung ist auch aus der Druckschrift EP 1 174 537 B1, ebenfalls von der Anmelderin, bekannt.

Der Erfindung liegt die Aufgabe zugrunde, eine Kombination aus einer Welle und einer Auswuchtvorrichtung vorzuschlagen, welche die Laufruhe der Welle verbessert.

Diese Aufgabe wird durch eine Baueinheit mit den Merkmalen des Anspruchs 1 und ein Verfahren zur Fertigung der Baueinheit mit den Merkmalen des Anspruchs 14 gelöst. Bevorzugte oder vorteilhafte Ausführungsformen der Erfindung ergeben sich aus den Unteransprüchen, der nachfolgenden Beschreibung sowie den beigefügten Figuren.

Erfindungsgemäß wird eine Baueinheit vorgeschlagen, welche eine Welle umfasst, auf der eine Auswuchtvorrichtung angeordnet ist. Die Welle bezeichnet in der allgemeinsten Ausführungsform einen Bereich eines Maschinenbauteils, welches im Betrieb um eine eigene Drehachse rotiert. Die Welle kann insbesondere auch als ein Teil, insbesondere ein Endabschnitt oder Zwischenabschnitt eines größeren rotierenden Körpers oder des Maschinenbauteils ausgebildet sein. Bevorzugt ist die Welle aber als ein stabförmiges, optional abgestuftes und/oder abgeschrägtes, und/oder rotationssymmetrisches Bauteil ausgebildet.

Die Auswuchtvorrichtung ist auf der Welle drehfest angeordnet, so dass sie im Betrieb gemeinsam mit der Welle um die gemeinsame Drehachse rotiert. Sie weist einen die Welle umlaufenden Ringkanal auf, welcher konzentrisch und/oder koaxial zu der Drehachse angeordnet ist. Der Ringkanal kann im Querschnitt senkrecht zu seiner Umlaufrichtung rechteckig, rund, oval bei abgewandelten Ausführungsformen beispielsweise auch schlüssellochähnlich, wie die Außenform einer Acht ausgebildet sein. Es ist auch möglich, dass die Auswuchtvorrichtung mehrere Ringkanäle aufweist, welche in axialer Richtung oder in radialer Richtung in Bezug auf die Drehachse benachbart angeordnet sind.

In dem Ringkanal ist mindestens ein Auswuchtkörper angeordnet, welcher sich entlang des Ringkanals auf einer Kreisbahn frei bewegen kann. Bevorzugt ist eine Mehrzahl derartiger Auswuchtkörper in dem Ringkanal angeordnet. Beispielsweise können der oder die Auswuchtkörper als Kugel ausgebildet sein, welche verklemmungsfrei in dem Ringkanal abrollen können.

Es ist besonders bevorzugt, wenn der Füllgrad des Ringkanals mit Auswuchtkörpern so gewählt ist, dass diese spaltfrei aneinandergereiht weniger als die Hälfte des Umfangs des Ringkanals belegen. Optional kann in dem Ringkanal eine dämpfende und/oder mittelviskose oder sogar hochviskose Flüssigkeit, wie zum Beispiel ein Öl, eingebracht sein. Bei einer Rotation der Welle bewegen sich die Auswuchtkörper selbsttätig in eine Position gegenüberliegend zu einer Unwucht der Baueinheit und/oder von mit der Baueinheit gekoppelten Massen, so dass die Unwucht durch die Auswuchtkörper kompensiert oder zumindest verringert wird.

Im Rahmen der Erfindung wird vorgeschlagen, dass die Welle und die Auswuchtvorrichtung unlösbar, insbesondere nicht zerstörungsfrei, miteinander verbunden sind. Insbesondere sind Welle und Auswuchtvorrichtung nach einer Trennung nicht mehr miteinander montierbar.

Dieses konstruktive Merkmal reflektiert eine der Erfindung zugrunde liegende Überlegung, dass es vorteilhaft ist, die Verbindung zwischen der Welle und der Auswuchtvorrichtung nicht durch den Anwender durchführen zu lassen, sondern bereits bei der Fertigung der Baueinheit vorzunehmen. Werden Welle und Auswuchtvorrichtung als separate Teile ausgeliefert, so muss die Passgenauigkeit zwischen der Auswuchtvorrichtung und der Welle sehr hoch sein, da ansonsten - kontraproduktiv - Vibrationen durch eine Unwucht, hervorgerufen durch die Auswuchtvorrichtung selbst, erzeugt werden könnten. Die Notwendigkeit der hohen Passgenauigkeit erhöht die Fertigungskosten deutlich. Ferner ist es oftmals der Fall, dass die Auswuchtvorrichtung und die Welle im Betrieb oder bei einer mehrmaligen Montage-Demontage Beschädigungen erfahren, die die hohe Passgenauigkeit verschlechtern.

Dadurch, dass die Welle und die Auswuchtvorrichtung als Baueinheit erfindungsgemäß unlösbar miteinander verbunden werden, wurden bzw. sind, liegt die Kontrolle der Passgenauigkeit im Einflussbereich des Produzenten. Beispielsweise kann bei einer Endkontrolle in der Produktionsfirma die Funktionsfähigkeit und die Betriebseigenschaften der Baueinheit über eine Qualitätskontrolle geprüft werden. Ein weiterer Vorteil der Erfindung kann auch die Erhöhung des Wirkungsgrads der Gesamtvorrichtung sein.

Bei einer bevorzugten konstruktiven Ausgestaltung der Erfindung ist vorgesehen, dass die unlösbare Verbindung als eine Formschluss- und/oder Stoffschlussverbindung ausgebildet ist. Im Fall einer Formschlussverbindung ist der Formschluss bevorzugt so realisiert, dass sowohl eine Relativbewegung zwischen Welle und Auswuchtvorrichtung in radialer als auch in axialer Richtung der Drehachse unterbunden ist. Die stoffschlüssige Verbindung kann beispielsweise durch einen thermisch aufgeschmolzenen Verbindungsbereich als auch durch einen chemisch verbundenen Verbindungsbereich, wie zum Beispiel einen Klebebereich, realisiert werden.

Bei einer besonders bevorzugten Ausführungsform der Erfindung wird ein Trägerbereich der Auswuchtvorrichtung oder die gesamte Auswuchtvorrichtung auf die Welle aufgeformt. Das Aufformen kann wahlweise durch einen Umformvorgang oder einen Urformvorgang erfolgen.

Bei einer vorteilhaften Weiterbildung der Erfindung ist vorgesehen, dass der oder ein Trägerabschnitt der Auswuchtvorrichtung auf die Welle mittels Kunststoffspritzguss aufgespritzt und damit aufgeformt ist. Diese Weiterbildung ist besonders bevorzugt, da durch den Spritzguss zum einen eine stoffschlüssige Verbindung zwischen Welle und Trägerabschnitt und zum anderen eine formschlüssige Verbindung mindestens in radialer Richtung und optional durch entsprechende Gestaltung der Welle auch in axialer Richtung der Drehachse erreichbar ist bzw. erreicht wird.

Bei einer möglichen Ausgestaltung der Erfindung weist die Welle Mittel zur formschlüssigen Aufnahme des Trägerabschnitts auf. Diese Mittel können beispielsweise als eine Rändelung, Riffelung, Durchbrüche, Stufen, Zähne etc. ausgebildet sein.

Bei einer bevorzugten konstruktiven Ausführungsform der Erfindung weist der Trägerabschnitt mindestens eine Laufbahn und/oder Kontaktbahn des Ringkanals auf, auf der die Auswuchtkörper laufend, abrollend und/oder verschiebbar angeordnet sind. Damit erhält der Trägerabschnitt neben seiner Funktion als Adapter eine weitere Funktion als Lauf- bzw. Kontaktbahnträger.

Bei einer möglichen Weiterbildung der Erfindung weist die Baueinheit eine Stützscheibe vorzugsweise aus Metall auf, welche auf der Welle angeordnet und gemeinsam mit der Welle umspritzt ist, wobei der umspritzte Kunststoff den Trägerabschnitt bildet. Besonders bevorzugt ist die Stützscheibe auf der Welle aufgepresst. Diese Stützscheibe erhöht die Stabilität des Trägerabschnitts in radialer und/oder axialer Richtung. Bei einer besonders bevorzugten Weiterbildung ist die Stützscheibe radial fluchtend mit dem Ringkanal angeordnet, so dass Belastungen, welche über den Ringkanal eingeleitet werden, über die Stützscheibe in die Welle abgeleitet werden können. Statt einer Stützscheibe kann auch ein anderer Stützkörper auf die Welle aufgesetzt werden.

Bei einer weiteren, optionalen Ausgestaltung der Erfindung weist der Trägerabschnitt eine Ringnut auf, welche drei Seitenwände des Ringkanals trägt bzw. diesen dreiseitig begrenzt und welche bevorzugt in axialer Richtung der Drehachse geöffnet ist. Diese Ausgestaltung erleichtert eine Entformung des Trägerabschnitts aus einem Werkzeug.

Besonders bevorzugt wird diese Ringnut durch einen Ringscheibenabschnitt z.B. aus Kunststoff verschlossen, welcher auf den Trägerabschnitt aufgesetzt und mit dem Trägerabschnitt vorzugsweise form- und/oder stoffschlüssig verbunden wird. Um eine Dichtigkeit zwischen Ringscheibenabschnitt und Trägerabschnitt zu erreichen, ist es bevorzugt, wenn diese Teile verklebt oder verschweißt, insbesondere ultraschallverschweißt sind. Damit wird durch den Trägerabschnitt und durch den Ringscheibenabschnitt der Ringkanal gebildet, welcher optional flüssigkeitsdicht ausgebildet ist und für den Betrieb mit dem oder den Auswuchtkörpern und dem dämpfenden Mittel gefüllt werden kann.

Bei einer bevorzugten Umsetzung der Erfindung ist die Baueinheit für die Integration in ein Handwerkzeug, insbesondere in eine Handschleifmaschine, im speziellen einen Winkelschleifer, ausgebildet. Die Welle dient bei dieser Umsetzung zum Antrieb der Schleifscheibe. Gerade im Anwendungsgebiet der Handschleifmaschine kommt es im Betrieb oftmals vor, dass die Schleifscheibe inhomogen ist, so dass durch die Schleifscheibe eine Unwucht begründet ist und dadurch möglicherweise gesundheitsschädliche Vibrationen hervorruft.

Zur Anpassung an den Anwendungsfall der Handschleifmaschine kann die Welle an einem Ende ein Gewinde zur Befestigung der Schleifscheibe aufweisen und/oder an einem Ende Sitze für Wälzlager, insbesondere Kugellager, zur Aufnahme der Innenringe der Wälzlager zeigen.

Bei einer bevorzugten konstruktiven Anpassung ist in der Auswuchtvorrichtung und bevorzugt in dem Trägerabschnitt eine umlaufende Zentrierschulter, z.B. in Form eines Stutzenfortsatzes ausgebildet, die die Schleifscheibe zentrierend aufnimmt. Es ist weiterhin bevorzugt, dass die Auswuchtvorrichtung und/oder der Tragkörper eine Anlagefläche für die Schleifscheibe bereitstellt. Die Anlagefläche kann stirnseitig als eine Ringfläche ausgebildet sein.

Ein weiterer Gegenstand betrifft ein Verfahren zur Fertigung der Baueinheit nach einem der vorhergehenden Ansprüche, wobei die Welle in ein Werkzeug eingelegt wird und mit Kunststoff umspritzt wird, so dass durch den Kunststoff der Trägerabschnitt und/oder die Auswuchtvorrichtung gebildet wird.

Bei einer besonders bevorzugten Ausführungsform des Verfahrens erfolgt die Positionierung und/oder Zentrierung der Welle in dem Werkzeug über die Sitze für die Wälzlager auf der Welle als Referenzflächen. Durch die Verwendung der Sitze als Referenzflächen bei der Positionierung der Welle in dem Werkzeug wird eine hohe Positioniergenauigkeit und daraus resultierend eine hohe Fertigungsgenauigkeit erreicht, was zu einer geringen Exzentrizität des Ringskanals zur Rotationsachse führt.

Weitere Merkmale, Vorteile und Wirkungen der Erfindung ergeben sich aus der nachfolgenden Beschreibung sowie der Figuren eines Ausführungsbeispiels der Erfindung. Dabei zeigt:

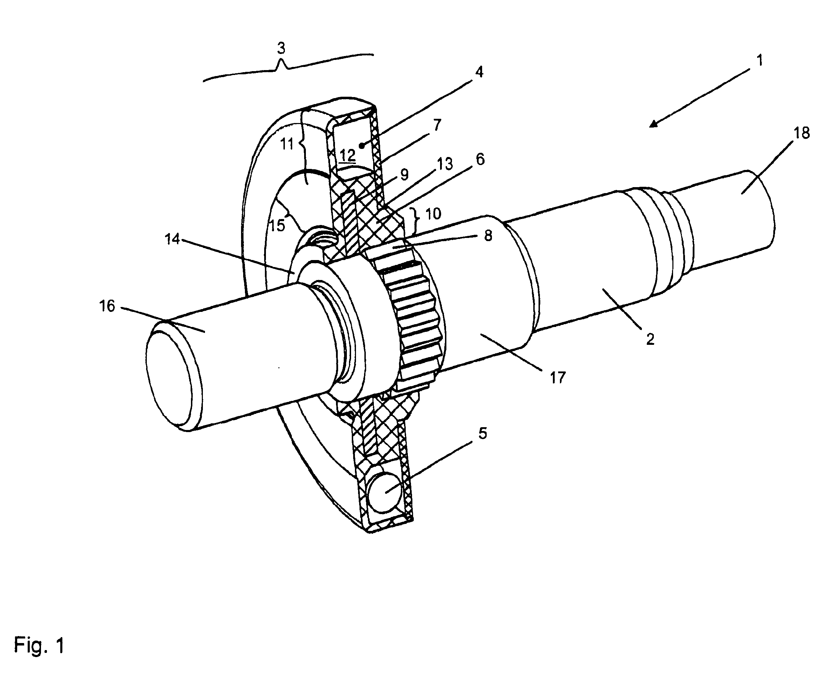

- Figur 1: eine schematische, dreidimensionale und teilgeschnittene Dar- stellung einer Baueinheit für einen Winkelschleifer.

Die Figur 1 zeigt eine schematische dreidimensionale Darstellung einer Baueinheit 1, welche eine Welle 2 und eine Auswuchtvorrichtung 3 umfasst. Die Baueinheit 1 bildet einen Teil einer von in der Hand aufzunehmenden Maschine, beispielsweise einer Handschleifmaschine. Die Welle 2 überträgt ein Antriebsdrehmoment von einem nicht dargestellten Motor auf ein nicht dargestelltes Werkzeug, insbesondere eine Schleifscheibe, welche in der Figur 1 auf der linken Seite auf der Welle 2 aufgesetzt ist.

Die Auswuchtvorrichtung 3 ist als ein Autobalancer ausgebildet, welche Vibrationen, die durch Unwuchten der rotierenden Masse, insbesondere der Welle 2 und des Werkzeugs, hervorgerufen werden, kompensiert oder zumindest dämpft.

Die Auswuchtvorrichtung 3 ist drehfest mit der Welle 2 verbunden, so dass diese im Betrieb gemeinsam mit der Welle 2 rotiert. Die Auswuchtvorrichtung 3 weist einen Ringkanal 4 auf, welcher in der Form einer Kreisbahn umlaufend zu der Welle 2 ausgebildet ist und in dem Auswuchtkörper in Form von Kugeln 5 beweglich und abrollbar gelagert sind. Zudem ist in dem Ringkanal 4 eine dämpfende Flüssigkeit, wie zum Beispiel Öl, vorgesehen. Die Anzahl der Kugeln 5 ist so gewählt, dass diese spaltfrei aneinandergereiht weniger als die Hälfte des Ringkanals 4 in Umlaufrichtung füllen. Die Kugeln 5 arbeiten im Betrieb als Auswuchtmassen und bewegen sich frei auf der Kreisbahn, die durch den Ringkanal 4 gebildet ist. Bei einer auftretenden Unwucht in der Welle 2 bzw. bei mit der Welle 2 drehfest verbundenen Komponenten verschieben sich die Kugeln 5 automatisch an Positionen, die sich gegenüber der Unwucht befinden. Damit bildet sich ein Gegengewicht, durch das die Unwucht ausgeglichen wird. Die Positioniergenauigkeit zwischen Welle 2 und Auswuchtvorrichtung 3 ist für die Funktion entscheidend, da bei einer Fehlpositionierung die Auswuchtvorrichtung 3 zur Unwucht beitragen würde.

In dem erfindungsgemäßen Ausführungsbeispiel umfasst die Auswuchtvorrichtung 3 einen Trägerabschnitt 6 sowie eine Ringscheibe 7, welche beide aus Kunststoff gefertigt sind. Der Trägerabschnitt 6 ist bei der Fertigung unmittelbar auf die Welle 2 aufgespritzt worden, so dass sich eine unlösbare oder nicht zerstörungsfrei lösbare Verbindung zwischen dem Trägerabschnitt 6 und damit der Auswuchtvorrichtung 3 einerseits und der Welle 2 andererseits ergibt. Durch die unlösbare Verbindung wird die Baueinheit einteilig, so dass sichergestellt ist, dass die Relativpositionierung zwischen Auswuchtvorrichtung 3 und Welle 2 konstant bleibt. Montage- und Demontagevorgänge der Auswuchtvorrichtung 3 von der Welle 2 sind durch die Art der Verbindung ausgeschlossen.

Zur Aufnahme oder Ankopplung des Trägerabschnitts 6 weist die Welle 2 einen umlaufenden, strukturierten Bereich 8 auf, welcher in der Figur 1 als eine Mehrzahl axial verlaufender Zähne ausgebildet ist. Bei anderen Ausführungsformen ist der Bereich 8 jedoch als Riffelung oder Rändelung zur Vergrößerung der Oberfläche und somit für eine verbesserte Kraftübertragung zwischen Welle 2 und Trägerabschnitt 6 ausgebildet.

Auf die Welle 2 ist eine Stützscheibe 9 aus Metall im Pressverband aufgesetzt, die sich radial zu der Drehachse der Welle 2 erstreckt und welche ebenfalls in dem Trägerabschnitt 6 eingespritzt ist. Die Stützscheibe 9 dient zur Kraftableitung von radialen oder axialen Kräften aus der Auswuchtvorrichtung 3 in die Welle 2. Insbesondere ist die Stützscheibe 9 in ihrer radialen Erstreckung fluchtend zu dem Ringkanal 4 angeordnet.

Der Trägerabschnitt 6 übernimmt als einstückiges und/oder einmaterialiges Kunststoffbauteil eine Mehrzahl von Funktionen:
- In einem Verbindungsabschnitt 10 ist der Trägerabschnitt 6 - wie bereits beschrieben - formschlüssig und/oder stoffschlüssig mit der Welle 2 verbunden und setzt damit eine Kopplungsfunktion um.
- Im radial äußeren Bereich weist der Trägerabschnitt 6 einen Nutabschnitt 11 auf, in dem eine ringförmige Nut 12 eingeformt ist, welche teilweise den Ringkanal 4 bildet, wobei die Nut 12 in axialer Richtung geöffnet ist. Damit realisiert der Trägerabschnitt 6 eine Tragfunktion für den Ringkanal 4.
- Ferner bildet der Trägerabschnitt 6 im Bereich des Verbindungsabschnitts 10 eine Auflageschulter 13 zur zentrierenden Anlage der Ringscheibe 7 und bildet somit eine Positionierhilfe für die Ringscheibe 7.
- Auf der gegenüberliegenden Seite zeigt der Trägerabschnitt 6 einen einstückig angeformten Zentrierabschnitt 14, welcher sich zylinderartig auskragend von dem Trägerabschnitt 6 koaxial zu der Welle 2 erstreckt. Der Zentrierabschnitt 14 dient als Aufnahmezentrierung für eine Schleifscheibe, die auf die Baueinheit 11 aufgesetzt wird.
- Auf der gleichen Seite bildet ein ringförmiger Anlagebereich 15, dessen Flächenerstreckung senkrecht zur Drehachse der Welle 2 ausgerichtet ist, eine Abstützmöglichkeit für die Schleifscheibe in axialer Richtung. Damit hat die Auswuchtvorrichtung 3 bzw. der Trägerabschnitt 6 zusätzlich die Funktion eines Adapters, in dem eine Aufnahmezentrierung 14 und ein Anlagebereich 15 für die Schleifscheibe bereitgestellt werden.

An dem einen Ende der Welle 2, welches in der Figur 1 auf der linken Seite dargestellt ist, ist ein Gewinde 16 (zeichnerisch nicht dargestellt) zur Aufnahme einer Spannmutter für die Schleifscheibe in die Welle 2 eingebracht. Auf der gegenüberliegenden Seite der Welle 2 sind zwei Lagersitze 17,18 für Wälzlager vorgesehen, die die Baueinheit 1 im Betrieb drehend lagern. Beispielsweise sind die Lagersitze 17,18 als geschliffene Lagersitze ausgebildet, welche zueinander gestuft angeordnet sind.

Bei der Fertigung der Baueinheit 1 können diese Lagersitze 17, 18 als Referenzflächen zur Positionierung der Welle 2 in einem Spritzwerkzeug eingesetzt werden. Nachdem die Welle 2 mit den Lagersitzen 17, 18 direkt als Aufnahme für den Trägerabschnitt 6 im Spritzgusswerkzeug dient, ist eine hohe Positioniergenauigkeit zwischen Welle 2 und aufgespritzten Trägerabschnitt 6 und damit der Auswuchtvorrichtung 3 erreichbar. Zusammenfassend betrachtet werden die funktionsrelevanten Durchmesser des Trägerabschnitts 6 direkt auf der Welle 2 in einem Spritzgusswerkzeug erzeugt, wobei die Welle 2 im Spritzgusswerkzeug optimal über die Lagersitze 17, 18 aufgenommen ist.

### Bezugszeichenliste

- 1: Baueinheit
- 2: Welle
- 3: Auswuchtvorrichtung
- 4: Ringkanal
- 5: Kugeln
- 6: Trägerabschnitt
- 7: Ringscheibe
- 8: umlaufender, strukturierter Bereich
- 9: Stützscheibe
- 10: Verbindungsabschnitt
- 11: Nutabschnitt
- 12: Nut
- 13: Auflageschulter
- 14: Zentrierabschnitt
- 15: Anlagefläche
- 16: Gewinde
- 17: Lagersitz
- 18: Lagersitz

## Patentansprüche

1. Baueinheit (1)
mit einer Welle (2), wobei die Welle (2) zur Rotation um eine Drehachse ausgebildet ist, und
mit einer Auswuchtvorrichtung (3), die mit der Welle (2) drehfest verbunden ist, wobei die Auswuchtvorrichtung (3) einen zu der Drehachse der Welle (2) koaxial und/oder konzentrisch ausgebildeten Ringkanal (4) sowie mindestens einen Auswuchtkörper (5) aufweist, der in dem Ringkanal (4) beweglich und/oder verschiebbar angeordnet ist, **dadurch gekennzeichnet, dass**
die Welle (2) mit der,Auswuchtvorrichtung (3) unlösbar verbunden ist.

2. Baueinheit (1) nach Anspruch 1, **dadurch gekennzeichnet, dass** die Welle (2) und die Auswuchtvorrichtung (3) über eine Formschluss- und/oder Stoffschlussverbindung unlösbar miteinander verbunden sind.

3. Baueinheit (1) nach Anspruch 1 oder 2, **dadurch gekennzeichnet, dass** mindestens ein Trägerabschnitt (6) der Auswuchtvorrichtung auf die Welle (2) aufgeformt ist.

4. Baueinheit (1) nach einem der vorhergehenden Ansprüche, **dadurch gekennzeichnet, dass** ein oder der Trägerabschnitt (6) der Auswuchtvorrichtung (3) mittels Kunststoffspritzguss auf die Welle (2) aufgeformt ist.

5. Baueinheit (1) nach einem der vorhergehenden Ansprüche, **dadurch gekennzeichnet, dass** die Welle (2) Mittel (8) zur formschlüssigen Aufnahme des Trägerabschnitts aufweist.

6. Baueinheit (1) nach Anspruch 5, **dadurch gekennzeichnet, dass** die Mittel (8) als Rändelung, Einprägung, Riffelung, Verzahnung oder Vergleichbares ausgebildet sind.

7. Baueinheit (1) nach einem der vorhergehenden Ansprüche 3 bis 6, **dadurch gekennzeichnet, dass** der Trägerabschnitt (6) mindestens eine Lauf- und/oder Kontaktbahn für mindestens einen Auswuchtkörper (5) trägt.

8. Baueinheit (1) nach einem der vorhergehenden Ansprüche 3 bis 7, **gekennzeichnet durch** eine Stützscheibe (9), welche auf der Welle (2) aufgesetzt ist und in dem Trägerabschnitt (6) eingespritzt ist.

9. Baueinheit (1) nach einem der vorhergehenden Ansprüche 3 bis 8, **dadurch gekennzeichnet, dass** der Trägerabschnitt (6) mindestens eine Ringnut (12) aufweist, in der mindestens ein Auswuchtkörper (5) angeordnet ist.

10. Baueinheit (1) nach Anspruch 9, **dadurch gekennzeichnet, dass** die Ringnut (12) in dem Trägerabschnitt (6) in axialer Richtung der Drehachse geöffnet ist und durch eine separate Ringscheibe (7) verschlossen ist.

11. Baueinheit (1) nach einem der vorhergehenden Ansprüche, **dadurch gekennzeichnet, dass** diese für ein Handwerkzeug, insbesondere als Antriebswelle für einen Winkelschleifer ausgebildet ist.

12. Baueinheit (1) nach Anspruch 11, **dadurch gekennzeichnet, dass** die Auswuchtvorrichtung (3) einen Zentrierring (14) und/oder eine Anlagefläche (15) für eine Aufnahme einer Schleifscheibe bildet.

13. Baueinheit (1) nach einem der Ansprüche 11 oder 12, **dadurch gekennzeichnet, dass** die Welle (2) ein Gewinde (16) zur Aufnahme einer Spannmutter und/oder ein oder mehrere Lagersitze (17, 18) für Wälzlager aufweist.

14. Verfahren zur Fertigung der Baueinheit (1) nach einem der vorhergehenden Ansprüche 3 bis 13, **dadurch gekennzeichnet, dass** die Welle (2) in ein Spritzwerkzeug eingelegt wird und der Trägerabschnitt (6) angespritzt wird.

15. Verfahren nach Anspruch 14, **dadurch gekennzeichnet, dass** der oder die Lagersitze (17,18) zur Zentrierung und/oder Positionierung und/oder als Referenzflächen der Welle (2) in dem Spritzwerkzeug eingesetzt werden.

## Claims

1. Construction unit (1),
with a shaft (2), the shaft (2) being designed for rotation about an axis of rotation, and
with a balancing device (3) which is connected fixedly in terms of rotation to the shaft (2), the balancing device (3) having an annular duct (4) formed coaxially and/or concentrically to the axis of rotation of the shaft (2), and also at least one balancing body (5) which is arranged movably and/or displaceably in the annular duct (4), **characterized in that**
the shaft (2) is connected unreleasably to the balancing device (3).

2. Construction unit (1) according to Claim 1, **characterized in that** the shaft (2) and the balancing device (3) are connected unreleasably to one another via a positive and/or materially integral connection.

3. Construction unit (1) according to Claim 1 or 2, **characterized in that** at least one carrier portion (6) of the balancing device is shaped onto the shaft (2).

4. Construction unit (1) according to one of the preceding claims, **characterized in that** one or the carrier portion (6) of the balancing device (3) is shaped onto the shaft (2) by means of plastic injection moulding.

5. Construction unit (1) according to one of the preceding claims, **characterized in that** the shaft (2) has means (8) for the positive reception of the carrier portion.

6. Construction unit (1) according to Claim 5, **characterized in that** the means (8) are designed as knurling, embossing, grooving, toothing or the like.

7. Construction unit (1) according to one of the preceding Claims 3 to 6, **characterized in that** the carrier portion (6) carries at least one running and/or contact track for at least one balancing body (5).

8. Construction unit (1) according to one of the preceding Claims 3 to 7, **characterized by** a supporting disc (9) which is placed on the shaft (2) and which is injection-moulded in the carrier portion (6).

9. Construction unit (1) according to one of the preceding Claims 3 to 8, **characterized in that** the carrier portion (6) has at least one annular groove (12) in which at least one balancing body (5) is arranged.

10. Construction unit (1) according to Claim 9, **characterized in that** the annular groove (12) in the carrier portion (6) is open in the axial direction of the axis of rotation and is closed by means of a separate annular disc (7).

11. Construction unit (1) according to one of the preceding claims, **characterized in that** it is designed for a hand tool, in particular as a driveshaft for an angle grinder.

12. Construction unit (1) according to Claim 11, **characterized in that** the balancing device (3) forms a centring ring (14) and/or a bearing surface (15) for receiving a grinding wheel.

13. Construction unit (1) according to either one of Claims 11 and 12, **characterized in that** the shaft (2) has a thread (16) for receiving a clamping nut and/or one or more bearing seats (17, 18) for rolling bearings.

14. Method for manufacturing the construction unit (1) according to one of the preceding Claims 3 to 13, **characterized in that** the shaft (2) is introduced into an injection-moulding die and the carrier portion (6) is injection-moulded onto it.

15. Method according to Claim 14, **characterized in that** the bearing seat or bearing seats (17, 18) is or are used for centring and/or positioning and/or as reference surfaces of the shaft (2) in the injection-moulding die.

## Revendications

1. Unité de montage (1), comprenant
un arbre (2), l'arbre (2) étant réalisé de manière à tourner autour d'un axe de rotation, et
un dispositif d'équilibrage (3), qui est connecté de manière solidaire en rotation à l'arbre (2), le dispositif d'équilibrage (3) présentant un canal annulaire (4) réalisé de manière coaxiale et/ou concentrique à l'axe de rotation de l'arbre (2), et présentant aussi un corps d'équilibrage (5) qui est disposé dans le canal annulaire (4) de manière mobile et/ou déplaçable,
**caractérisée en ce que**
l'arbre (2) est connecté de manière inamovible au dispositif d'équilibrage (3).

2. Unité de montage (1) selon la revendication 1, **caractérisée en ce que** l'arbre (2) et le dispositif d'équilibrage (3) sont connectés l'un à l'autre de manière inamovible par le biais d'une connexion par engagement par correspondance de forme et/ou par une connexion par liaison de matière.

3. Unité de montage (1) selon la revendication 1 ou 2, **caractérisée en ce qu'**au moins une portion de support (6) du dispositif d'équilibrage est formée sur l'arbre (2).

4. Unité de montage (1) selon l'une quelconque des revendications précédentes, **caractérisée en ce qu'**une ou la portion de support (6) du dispositif d'équilibrage (3) est formée sur l'arbre (2) au moyen d'un moulage par injection de plastique.

5. Unité de montage (1) selon l'une quelconque des revendications précédentes, **caractérisée en ce que** l'arbre (2) présente des moyens (8) pour recevoir par engagement par coopération de forme la portion de support.

6. Unité de montage (1) selon la revendication 5, **caractérisée en ce que** les moyens (8) sont réalisés sous forme de moletage, de gaufrage, de striation, de denture ou similaire.

7. Unité de montage (1) selon l'une quelconque des revendications précédentes 3 à 6, **caractérisée en ce que** la portion de support (6) porte au moins une piste de roulement et/ou de contact pour au moins un corps d'équilibrage (5).

8. Unité de montage (1) selon l'une quelconque des revendications précédentes 3 à 7, **caractérisée par** un disque de support (9), qui est placé sur l'arbre (2) et qui est moulé par injection dans la portion de support (6).

9. Unité de montage (1) selon l'une quelconque des revendications 3 à 8, **caractérisée en ce que** la portion de support (6) présente au moins une rainure annulaire (12) dans laquelle est disposé au moins un corps d'équilibrage (5).

10. Unité de montage (1) selon la revendication 9, **caractérisée en ce que** la rainure annulaire (12) est ouverte dans la portion de support (6) dans la direction axiale de l'axe de rotation et est fermée par un disque annulaire séparé (7).

11. Unité de montage (1) selon l'une quelconque des revendications précédentes, **caractérisée en ce que** celle-ci est réalisée pour un outil manuel, notamment sous forme d'arbre d'entraînement pour une meuleuse d'angle.

12. Unité de montage (1) selon la revendication 11, **caractérisée en ce que** le dispositif d'équilibrage (3) forme une bague de centrage (14) et/ou une surface d'appui (15) pour recevoir une meule.

13. Unité de montage (1) selon l'une quelconque des revendications 11 ou 12, **caractérisée en ce que** l'arbre (2) présente un filetage (16) pour recevoir un écrou de serrage et/ou un ou plusieurs sièges de palier (17, 18) pour des paliers à roulement.

14. Procédé de fabrication de l'unité de montage (1) selon l'une quelconque des revendications précédentes 3 à 13, **caractérisé en ce que** l'arbre (2) est introduit dans un outil de pulvérisation et la portion de support (6) est moulée par-dessus par injection.

15. Procédé selon la revendication 14, **caractérisé en ce que** le ou les sièges de palier (17, 18) sont utilisés pour le centrage et/ou le positionnement et/ou en tant que surfaces de référence de l'arbre (2) dans l'outil de pulvérisation.
